# EUROPÄISCHE PATENTSCHRIFT

(11) **EP 1 151 148 B1**
(45) Veröffentlichungstag und Bekanntmachung des Hinweises auf die Patenterteilung: **12.06.2002**
(21) Anmeldenummer: 00902566.9
(22) Anmeldetag: 07.01.2000
(51) Int. Cl.: C23C 26/02

(54) **VERFAHREN ZUR ERZEUGUNG EINES SCHUTZBELAGS SOWIE MASCHINE MIT WENIGSTENS EINEM MIT EINEM SCHUTZBELAG VERSEHENEN BAUTEIL**
METHOD FOR PRODUCING A PROTECTIVE COVERING, AND AN ENGINE WITH AT LAST ONE COMPONENT PROVIDED WITH A PROTECTIVE COVERING
PROCEDE DE REALISATION D'UN DOUBLAGE PROTECTEUR ET MACHINE PRESENTANT AU MOINS UN COMPOSANT POURVU D'UN DOUBLAGE PROTECTEUR

(30) Priorität: 13.01.1999 DE 19900942
(43) Veröffentlichungstag der Anmeldung: 07.11.2001
(73) Patentinhaber: MAN B & W Diesel A/S, 2450 Copenhagen SV (DK)
(72) Erfinder: MOCZULSKI, Lech, DK-2650 Hvidovre (DK); ANDERSEN, Erling, Bredal, DK-2630 Taastrup (DK)
(74) Vertreter: Munk, Ludwig, Dipl.-Ing.
(86) Internationale Anmeldenummer: EP0000057
(87) Internationale Veröffentlichungsnummer: WO0042238

(56) Entgegenhaltungen:
- WO-A-98/25017

## Beschreibung

Die Erfindung betrifft ein Verfahren zur Erzeugung eines aus Aluminium-Bronze bestehenden Schutzbelags mit einer vergleichsweise weichen Deckschicht und einer darunter sich befindenden, wesentlich härteren und verschleißfesteren Tragschicht an der Oberfläche von aus Gusseisen als Grundmaterial bestehenden Bauteilen sowie eine Maschine mit wenigstens einem aus Gusseisen bestehenden Bauteil, das an seiner Oberfläche mit einem Schutzbelag vorstehend erwähnter Art versehen ist.

Aus der WO-A- 98/ 25 017 ist ein Verfahren zur Erzeugung eines aus einer Aluminium-Bronze bestehenden Schutzbelags an der Oberfläche von aus Stahl, Gußstahl oder Gusseisen bestehenden Bauteilen bekannt. Der Schutzbelag wird dabei in Form mehrerer, einander überdeckender Lagen im Thermosprühverfahren aufgesprüht, wobei eine komplette Lage die Deckschicht und wenigstens eine weitere, komplette Lage die Tragschicht bilden. Die Tragschicht und die Deckschicht werden dementsprechend nacheinander aufgesprüht und befinden sich in zwei unterschiedlichen, nacheinander aufgesprühten Lagen. Zur Erzielung von Tragschicht- bzw. Deckschichtqualitäten kommen spezielle Maßnahmen, wie Verwendung unterschiedlicher Sprüharten, zur Anwendung. Das bekannte Verfahren erweist sich daher als vergleichsweise aufwendig.

Hiervon ausgehend ist es daher die Aufgabe der vorliegenden Erfindung, ein Verfahren eingangs erwähnter Art zu schaffen, das bei aus Gusseisen als Grundmaterial bestehenden Bauteilen auf einfache Weise die Erzeugung einer vergleichsweise weichen Deckschicht und einer vergleichsweise harten Tragschicht ermöglicht.

Diese Aufgabe erfindungsgemäß durch das Kennzeichen der Ansprüche 1 oder 2 gelöst.

Die direkt auf das Gusseisen aufgeschmolzene Aluminium-Bronze erweist sich in überraschender Weise in ihrem gusseisennahen Bereich als wesentlich härter als in ihrem gusseisenfemen Bereich. Es ergeben sich daher innerhalb ein und derselben Lage automatisch eine grundmaterialnahe, vergleichsweise harte Tragschicht und eine grundmaterialferne, vergleichsweise weiche Deckschicht, die vielfach als Einlaufschicht dienen kann, die während der Einlaufphase von selbst verschwindet, so dass anschließend die Tragschicht zum Tragen kommen kann. Bei Versuchen mit einer direkt auf das Gusseisen aufgeschmolzenen Lage aus Aluminium-Bronze wurden im Bereich der äußeren Deckschicht die erwartete Härte und Farbe der Aluminium-Bronze gefunden. Im darunterliegenden, gusseisennahen Bereich konnte jedoch eine gegenüber außen vierfache Härte festgestellt werden. Da mittels eines Auftrags gleichzeitig die weiche Deckschicht und die harte Tragschicht erzeugt werden können, ist in vorteilhafter Weise eine hohe Wirtschaftlichkeit gewährleistet.

Wenn zwei Lagen aus einer Aluminium-Bronze aufgschmolzen werden wobei die erste Lage direkt auf das das Grundmaterial bildende Gusseisen und die zweite Lage direkt auf die erste Lage aufgeschmolzen werden, ergeben sich in jeder Lage zwei Schichten in Form einer vergleichsweise weichen, gusseisenfemen Schicht und einer demgegenüber härteren, gusseisennahen Schicht, wobei das Härteniveau der Schichten der äußeren Lage höher als das Härteniveau der entsprechenden Schichten der darunter sich befindenden Lage ist. Diese Lösung ist daher insbesondere dann zu bevorzugen, wenn ein besonders hohes Härteniveau erwünscht ist.

Vorteilhafte Weiterbildungen des übergeordneten Verfahrens sind in den hierauf zurückbezogenen Unteransprüchen angegeben. So erweist es sich als besonders zweckmäßig, wenn das Grundmaterial vor dem Aufschmelzen der den zweischichtigen Schutzbelag bildenden Lage vorgewärmt wird. Hierdurch kann die Dicke der harten Tragschicht gesteigert werden. Zweckmäßig wird die Aluminium-Bronze auf die jeweilige Unterlage durch Schweißen aufgeschmolzen. Dies erweist sich als einfach und kostengünstig.

Die zur Verwendung kommende Aluminium-Bronze kann hinsichtlich ihrer Zusammensetzung den Bedürfnissen des Einzelfalls angepasst werden. Sofern eine besonders weiche Deckschicht erreicht werden soll, erweist sich eine Aluminium-Bronze mit 8% - 11% Al, 4% - 6% Ni, 3% - 5% Fe, 1% - 2% Mn und Rest Cu als besonders zweckmäßig. Sofern eine härtere Deckschicht erreicht werden soll, kann zweckmäßig eine Aluminium-Bronze mit 13% - 16% Al, 4% - 5% Fe, 0,2% - 0,8% Si, 1% - 2% Mn, höchstens 0,2% C und Rest Cu Verwendung finden.

Bei Maschinen mit wenigstens einem aus Gusseisen bestehenden Bauteil, das an seiner Oberfläche einen Schutzbelag mit einer vergleichsweise weichen, während der Einlaufphase verschleißenden Einlaufschicht und einer darunter sich befindenden, wesentlich härteren und verschleißfesteren Tragschicht aufweist, lässt sich durch Verwendung des erfindungsgemäßen Verfahrens auf einfache Weise eine lange Lebensdauer erreichen. Dabei ergibt sich ein Schutzbelag, der eine aus Aluminium-Bronze bestehende Lage aufweist, die in sich zwei Zonen in Form einer Einlaufschicht (9) und einer Tragschicht (8) enthält, wobei die Härte und Farbe der die Einlaufschicht (9) bildenden Zone der normalen Härte und Farbe der verwendeten Aluminium-Bronze entsprechen und die die darunter liegende Tragschicht (8) bildende Zone eine gegenüber außen vierfache Härte aufweist.

Weitere zweckmäßige Maßnahmen ergeben sich aus der nachstehenden Beispielsbeschreibung anhand der Zeichnung.

In der nachstehend beschriebenen Zeichnung zeigen:
- Figur 1: eine Teilansicht eines Zylinders eines Zweitakt-Großdieselmotors im Schnitt und
- Figur 2: eine vergrößerte Darstellung eines mit einem Schutzbelag versehenen Ausschnitts der Anordnung gemäß Figur 1.

Die vorliegende Erfindung kann überall dort zur Anwendung kommen, wo ein aus Gusseisen, vorzugsweise aus Grauguss mit Flächen-, Vermicular- oder Kugel-Graphit bestehendes Bauteil an der Oberfläche einen Schutzbelag benötigt, der eine äußere, vergleichsweise weiche Deckschicht und eine darunter sich befindende, wesentlich härtere Tragschicht aufweist. Dies ist z.B. bei verschiedenen Teilen von Motoren, wie Kolben, Kolbenringen, Kolbenringnuten, Kolbenhemden, Zylinderlaufflächen etc. der Fall, da diese Teile eine äußere, weiche Einlaufschicht, die während der Einlaufphase verschwindet, und eine innere, härtere Tragschicht benötigen, die im Anschluss an die Einlaufphase zum Tragen kommt und eine lange Lebensdauer aufweisen soll.

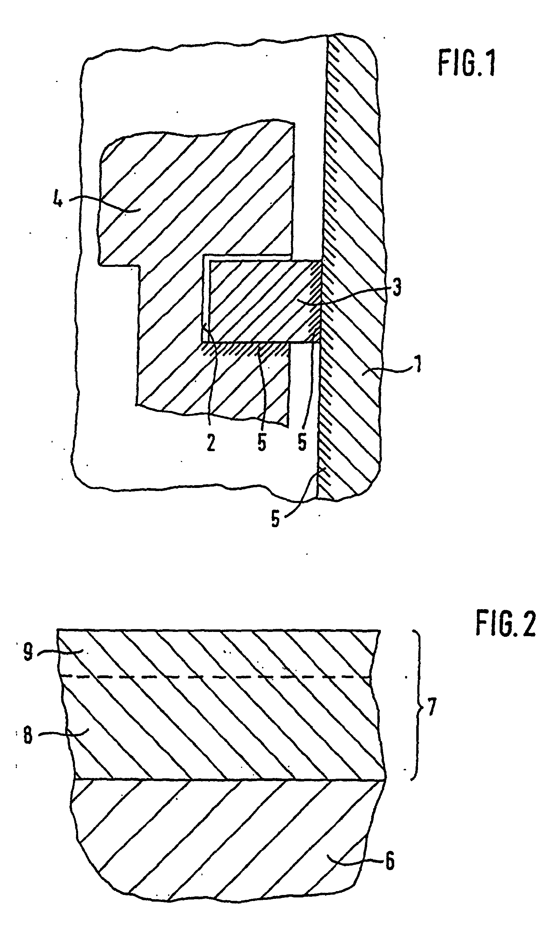

Der der Figur 1 zugrundeliegende Zylinder eines Zweitakt-Großdieselmotors enthält eine mit nicht dargestellten Einlaßschlitzen versehene Zylinderbüchse 1, auf die ein nicht näher dargestellter, mit einer Auslassanordnung versehener Zylinderkopf aufgesetzt ist Die Innenseite der Zylinderbüchse 1 ist als Lauffläche ausgebildet, mit der ein mit den in zugeordneten Kolbenringnuten 2 angeordneten Kolbenringen 3 versehener Kolben 4 zusammenwirkt. Die Zylinderbüchse 1, der Kolben 4 und die Kolbenringe 3 bestehen aus Gusseisen, in der Regel Grauguss, der Flächen-, Vermicular- oder Kugel-Graphit enthält. Im Bereich der Lauffläche der Zylinderbüchse 1, der Umfangsfläche der Kolbenringe 3 und der Flanken der Kolbenringnuten 2 ist im dargestellten Beispiel jeweils ein Schutzbelag 5 angedeutet, der bessere Trageigenschaften als das aus Gusseisen bestehende Grundmaterial aufweist und dementsprechend die Lebensdauer erhöht.

Ein derartiger Schutzbelag 5 kann selbstverständlich auch anderen, ähnlichen Belastungsverhältnissen ausgesetzten Bauteilen zugeordnet sein, bei einem Zweitakt-Großdieselmotor beispielsweise den Kreuzkopflagem und Kreuzkopfführungen.

Der Schutzbelag 5 wird, wie am besten aus Figur 2 erkennbar ist, durch eine auf das Grundmaterial 6 zweckmäßig durch Schweißen aufgeschmolzene Lage 7 aus einer geeigneten Aluminium-Bronze gebildet. Dabei entstehen, wie sich in überraschender Weise herausgestellt hat, zwei in Figur 2 durch eine unterbrochene Trennlinie angedeutete Schichten 8, 9. Dabei besitzt die äußere, grundmaterialfeme Schicht 9 die von der verwendeten Aluminium-Bronze zu erwartende Farbe und Härte. Diese äußere Deckschicht ist dementsprechend vergleichsweise weich und eignet sich daher als Einlaufschicht, die während der Einlaufphase von selbst verschwindet. Die darunterliegende, grundmaterialnahe Schicht 8 besitzt dem gegenüber eine wesentlich größere Härte und kann daher als verschleißfeste Tragschicht fungieren, die zum Tragen kommt, wenn die Einlaufschicht verschwunden ist. Bei Versuchen mit einer Aluminium-Bronze die üblicherweise eine Härte von 200 HV ergibt, wurde in der äußeren Schicht die erwartete Härte von 200 HV und in der inneren Schicht eine viermal höhere Härte von 800 HV festgestellt. Die Dicke der die beiden Schichten 8, 9 enthaltenden Lage 7 betrug ca. 2,5 mm, wobei sich für die innere, harte Tragschicht eine Dicke von etwa 1,5 mm und für die äußere, weiche Deckschicht eine Dicke von etwa 1 mm ergeben hat. Durch eine Vorwärmung des Grundmaterials 6 auf ca. 400° C konnte die Breite der harten Tragschicht 8 vergrößert werden.

Als Material zur Bildung der Lage 7 kann eine Aluminium-Bronze Verwendung finden, die 8% - 25% Al, wenigstens eine der Komponenten Sb, Co, Be, Cr, Sn, Mn, Si, Cd, Zn, Fe, Ni, Pb, C und Fe mit jeweils 0,2% - 10% und Rest Cu enthält. Sofern eine vergleichsweise weiche Deckschicht erreicht werden soll, kann eine Aluminium-Bronze Verwendung finden, die 8% - 11% Al, 4% - 6% Ni, 3% - 5% Fe, 1% - 2% Mn und Rest Cu enthält. Bei Verwendung einer derartigen Aluminium-Bronze hat sich im Bereich der äußeren Deckschiht 9 eine Härte von etwa 200 HV ergeben. Eine derartige Aluminium-Bronze lag dem oben erwähnten Beispiel zugrunde. In manchen Fällen soll die äußere Deckschicht 9 eine etwas größere Härte aufweisen. Hier erweist sich eine Aluminium-Bronze mit 13% - 16% Al, 4% - 5% Fe, 0,2% - 0,8% Si, 1% - 2% Mn, höchstens 0,2% Ce und Rest Cu als zweckmäßig. Bei Verwendung einer derartigen Aluminium-Bronze konnte eine Härte der Deckschicht 9 von etwa 350 HV erreicht werden. Die Härte der inneren Tragschicht 8 war in jedem Fall wesentlich größer als die Härte der äußeren Deckschicht 9. Hier konnte eine Härte bis etwa 900 HV erreicht werden.

Die aus einer Aluminium-Bronze bestehende Lage 7 kann, wie oben schon erwähnt wurde, durch einen Schweißvorgang auf das Grundmaterial. 6 aufgeschmolzen werden. Dabei können ein elektrischer Lichtbogen oder Flammen oder Laserstrahlen Verwendung finden.

Weitere Versuche haben gezeigt, dass man auch mehrere Lagen, vorzugsweise zwei Lagen, übereinander anbringen kann, wobei das Härteniveau der Lagen mit der Entfernung vom Grundmaterial 6 zunimmt, d.h. das Härteniveau der äußeren Lage ist größer als das Härteniveau der darunter sich befindenden Lage. So wurden z.B. bei Versuchen mit zwei Lagen aus derselben Aluminium-Bronze mit 13% - 16% Al, 4% - 5% Fe, 0,2% -0,8 % Si, 1% - 2% Mn, weniger als 0,2% C und Rest Cu im Bereich der oberen Schicht der ersten Lage eine Härte bis etwa 400 HV und im Bereich der Außenschicht der zweiten Lage eine Härte bis etwa 600 HV festgestellt.

## Patentansprüche

1. Verfahren zur Erzeugung eines aus Aluminium-Bronze bestehenden Schutzbelags mit einer vergleichsweise weichen Deckschicht und einer darunter sich befindenden, wesentlich härteren und verschleißfesteren Tragschicht an der Oberfläche von aus Gusseisen als Grundmaterial bestehenden Bauteilen, **dadurch gekennzeichnet, dass** die Aluminium-Bronze direkt auf das aus Gusseisen bestehende Grundmaterial (6) aufgeschmolzen wird, wobei eine so gebildete, aus Aluminium-Bronze bestehende Lage (7) vorgesehen wird, die in sich zwei Schichten in Form einer vergleichsweise weichen, gusseisenfernen Schicht (9) und einer dem gegenüber härteren, gusseisennahen Schicht (8) aufweist.

2. Verfahren zur Erzeugung eines aus einer Aluminium-Bronze bestehenden Schutzbelags mit einer vergleichsweise weichen Deckschicht und einer darunter sich befindenden, wesentlich härteren und verschleißfesteren Tragschicht an der Oberfläche von aus Gusseisen als Grundmaterial bestehenden Bauteilen, **dadurch gekennzeichnet, dass** die Aluminium-Bronze direkt auf die zugeordnete Unterlage aufgeschmolzen wird, wobei auf eine erste, direkt auf das aus Gusseisen bestehende Grundmaterial aufgeschmolzene, aus Aluminium-Bronze bestehende Lage (7) diese überdeckend wenigstens eine weitere, aus Aluminium-Bronze bestehende Lage (7) direkt aufgeschmolzen wird, und wobei jede dieser Lagen (7) in sich zwei Schichten in Form einer vergleichsweise weichen, gusseisenfemen Schicht (9) und einer dem gegenüber härteren, gusseisennahen Schicht (8) aufweist.

3. Verfahren nach Anspruch 1 oder 2, **dadurch gekennzeichnet, dass** das Grundmaterial (6) vor dem Aufschmelzen einer Lage (7) vorgewärmt wird.

4. Verfahren nach Anspruch 3, **dadurch gekennzeichnet, dass** das Grundmaterial (6) auf eine Temperatur bis 400° C vorgewärmt wird.

5. Verfahren nach einem der vorhergehenden Ansprüche, **dadurch gekennzeichnet, dass** die zur Bildung der wenigstens einen Lage (7) Verwendung findende Aluminium-Bronze 8% - 25% Al, wenigstens eine der Komponenten Sb, CO, Be, Cr, Sn, Mn, Si, Cd, Zn, Fe, Ni, Pb und C mit jeweils 0,2% - 10% und Rest Cu enthält.

6. Verfahren nach Anspruch 5, **dadurch gekennzeichnet, dass** die zur Bildung der wenigstens einen Lage (7) Verwendung findende Aluminium-Bronze zur Bildung einer vergleichsweise weichen Deckschicht (9) 8% - 11% Al, 4% - 6% Ni, 3% - 5% Fe, 1% - 2% Mn und Rest Cu enthält.

7. Verfahren nach Anspruch 5, **dadurch gekennzeichnet, dass** die zur Bildung der wenigstens einen Lage (7) Verwendung findende Aluminium-Bronze zur Bildung einer vergleichsweise harten Deckschicht (9) 13% - 16% Al, 4% - 5% Fe, 0,2% - 0,8% Si, 1% - 2% Mn, weniger 0,2% C und Rest Cu enthält.

8. Verfahren nach einem der vorhergehenden Ansprüche, **dadurch gekennzeichnet, dass** die zur Bildung des zweischichtigen Schutzbelags aufgebrachte Lage (7) eine Dicke von 2 mm - 3 mm, vorzugsweise 2,5 mm aufweist.

9. Verfahren nach einem der vorhergehenden Ansprüche, **dadurch gekennzeichnet, dass** das Grundmaterial (6), auf das die wenigstens eine, den zweischichtigen Schutzbelag bildende Lage (7) aus Aluminium-Bronze aufgebracht wird, aus Graphit enthaltendem Gusseisen besteht.

10. Maschine, insbesondere Hubkolbenmaschine, mit wenigstens einem aus Gusseisen, vorzugsweise Flächen-, Vermicular- oder Kugel-Graphit enthaltendem Gusseisen, bestehenden Bauteil, das an seiner Oberfläche mit einem aus Aluminium-Bronze bestehenden Schutzbelag mit einer vergleichsweise weichen, während der Einlaufphase verschleißenden Einlaufschicht (9) und einer darunter sich befindenden, wesentlich härteren und verschleißfesteren Tragschicht (8) versehen ist, **dadurch gekennzeichnet, dass** der Schutzbelag, eine aus Aluminium-Bronze bestehende Lage (7) aufweist, die zwei Zonen in Form einer Einlaufschicht (9) und einer Tragschicht (8) enthält, wobei die Härte und Farbe der die Einlaufschicht (9) bildenden Zone der normalen Härte und Farbe der verwendeten Aluminium-Bronze entsprechen und die die darunter liegende Tragschicht (8) bildende Zone eine gegenüber außen vierfache Härte aufweist.

## Claims

1. A procedure for manufacturing a protective coating made out of aluminum-bronze with a comparatively soft cover sector and an underlying, significantly harder and more wear-resistant supporting sector on the surface of machine parts made of cast iron as the base material, **characterized in that** the aluminum-bronze is melted directly onto the base material (6) consisting of cast iron, wherein an aluminum-bronze layer (7) formed in this way is provided, which itself is comprised of two sections in the form of a comparatively soft section (9) away from the cast iron, and a comparatively harder section (8) near the cast iron.

2. The procedure for manufacturing a protective coating made out of aluminum-bronze with a comparatively soft cover sector and an underlying, significantly harder and more wear-resistant supporting sector on the surface of machine parts made of cast iron as the base material, **characterized in that** the aluminum-bronze is directly melted onto the allocated substrate, wherein at least one other aluminum-bronze layer (7) is directly melted onto and covers a first aluminum-bronze layer (7) melted directly onto the base material comprised of cast iron, and wherein each of these layers (7) is itself comprised of two sections in the form of a comparatively soft section (9) away from the cast iron, and a comparatively harder section (8) near the cast iron.

3. The procedure according to claim 1 or 2, **characterized in that** the base material (6) is preheated before melting on a layer (7).

4. The procedure according to claim 3, **characterized in that** the base material (6) is preheated to a temperature of up to 400 °C.

5. The procedure according to one of the preceding claims, **characterized in that** the aluminum-bronze used in making the at least one layer (7) contains 8 % - 25 % Al, at least one of the components Sb, CO, Be, Cr, Sn, Mn, Si, Cd, Zn, Fe, Ni, Pb and C with a respective 0.2 % - 10 %, and the remainder Cu.

6. The procedure according to claim 5, **characterized in that** the aluminum-bronze used in making the at least one layer (7) contains 8 % - 11 % Al, 4 % - 6 % Ni, 3 % - 5 % Fe, 1 % - 2 % Mn and the remainder Cu to create a comparatively soft cover layer (9).

7. The procedure according to claim 5, **characterized in that** the aluminum-bronze used in making the at least one layer (7) contains 13 % - 16 % Al, 4 % - 5 % Fe, 0.2 % - 0.8 % Si, 1 % - 2 % Mn and the remainder Cu to create a comparatively hard cover layer (9).

8. The procedure according to one of the preceding claims, **characterized in that** the layer (7) applied to create the two-section protective coating has a thickness of 2 mm - 3 mm, preferably 2.5 mm.

9. The procedure according to one of the preceding claims, **characterized in that** the base material (6) on which the at least one aluminum-bronze layer (7) creating the two-section protective coating is applied consists of graphite-containing cast iron.

10. A machine, in particular a reciprocating piston machine, with at least one component consisting of a cast iron, preferably cast iron with superficial, vermicular or ball graphite, whose surface is provided with an aluminum-bronze protective coating with a comparatively soft inlet sector (9) that wears during the inlet phase, and an underlying, significantly harder and more wear-resistant supporting sector (8), **characterized in that** the protective coating exhibits an aluminum-bronze layer (7), which has two zones in the form of an inlet section (9) and a supporting section (8), wherein the hardness and color of the zone forming the inlet section (9) correspond to the normal hardness and color of the used aluminum-bronze, and the zone forming the underlying supporting section (8) exhibits four times the hardness in comparison to the outside section.

## Revendications

1. Procédé de réalisation d'un doublage protecteur consistant en aluminium-bronze avec une couche de couverture relativement molle et une couche porteuse se trouvant en dessous nettement plus dure et plus résistante à l'usure à la surface de composants fabriqués en fonte de fer comme matière de base, **caractérisé en ce que** l'aluminium-bronze est directement fondu sur la matière de base (6) consistant en fonte de fer, un revêtement (7) ainsi formé consistant en aluminium-bronze, qui présente à l'intérieur deux couches sous forme d'une couche relativement molle éloignée de la fonte de fer (9) et une couche proche de la fonte de fer plus dure (8) par rapport à celle-ci, étant prévu.

2. Procédé de réalisation d'un doublage protecteur consistant en aluminium-bronze avec une couche de couverture relativement molle et une couche porteuse se trouvant en dessous nettement plus dure et plus résistante à l'usure à la surface de composants fabriqués en fonte de fer comme matière de base, **caractérisé en ce que** l'aluminium-bronze est directement fondu sur la base associée, au moins un autre revêtement supplémentaire (7) consistant en aluminium-bronze étant directement fondu sur un premier revêtement (7) consistant en aluminium-bronze fondu directement sur la matière de base consistant en fonte de fer, en le recouvrant, et chacun de ces revêtements (7) présentant à l'intérieur deux couches sous forme d'une couche relativement molle éloignée de la fonte de fer (9) et une couche proche de la fonte de fer plus dure (8) par rapport à celle-ci.

3. Procédé selon la revendication 1 ou 2, **caractérisé en ce que** la matière de base (6) est préchauffée avant la fusion d'un revêtement (7).

4. Procédé selon la revendication 3 **caractérisé en ce que** la matière de base (6) est préchauffée à une température allant jusqu'à 400 °C.

5. Procédé selon une des revendications précédentes, **caractérisé en ce que** le bronze-aluminium 8 % - 25 % Al étant utilisé pour la formation d'au moins un des revêtements (7) contient au moins un des composants Sb, CO, Be, Cr, Sn, Si, Cd, Zn, Fe, Ni, Pb et C avec respectivement un taux de 0,2 à 10 % et le reste de Cu.

6. Procédé selon la revendication 5, **caractérisé en ce que** l'aluminium-bronze étant utilisé pour la formation d'au moins un des revêtements (7) pour la formation d'une couche de couverture relativement molle (9) contient 8 % - 11 % d'Al, 4 % - 6 % de NI, 3 % - 5 % de Fe, 1 % - 2 % de Mn et le reste de Cu.

7. Procédé selon la revendication 5, **caractérisé en ce que** le bronze-aluminium étant utilisé pour la formation d'au moins un des revêtements (7) pour la formation d'une couche de couverture relativement dure (9) contient 13 % - 16 % d'Al, 4 % - 5 % de Fe, 0,2 % - 0,8 % SI, 1 % - 2 % de Mn, moins de 0,2 % de C et le reste de Cu.

8. Procédé selon une des revendications précédentes, **caractérisé en ce que** le revêtement (7) appliqué pour la formation du doublage protecteur en deux couches présente une épaisseur de 2 mm à 3 mm, de préférence de 2,5 mm.

9. Procédé selon une des revendications précédentes, **caractérisé en ce que** la matière de base (6), sur laquelle au moins l'un des revêtements (7) en aluminium-bronze formant le doublage protecteur en deux couches est appliqué, consiste en une fonte de fer contenant du graphite.

10. Machine, en particulier machine à piston alternatif, avec au moins un composant consistant en fonte de fer, de préférence une fonte de fer contenant du graphite de surface, vermiculaire ou sphéroïdal, qui est pourvu sur sa surface d'un doublage protecteur consistant en aluminium-bronze avec une couche d'amorce (9) relativement molle s'usant pendant la phase d'amorce et une couche porteuse (8) se trouvant en dessous nettement plus dure et plus résistante à l'usure, **caractérisée en ce que** le doublage protecteur présente un revêtement (7) consistant en aluminium-bronze, qui contient deux zones sous forme d'une couche d'amorce (9) et d'une couche porteuse (8), la dureté et la couleur de la zone formant la couche d'amorce (9) correspondant à la dureté et à la couleur normale de l'aluminium-bronze utilisé et la zone formant la couche porteuse (8) située dessous présentant une dureté quatre fois plus élevée qu'à l'extérieur.
